# EUROPEAN PATENT SPECIFICATION

(11) **EP 2 697 491 B1**
(45) Date of publication and mention of the grant of the patent: **29.11.2017**
(21) Application number: 12703563.2
(22) Date of filing: 18.01.2012
(51) Int. Cl.: F02B 77/10, F02B 77/13, F02F 7/00

(54) **CRANKCASE DOOR**
TÜR FÜR EIN KURBELGEHÄUSE
PORTE DE CARTER

(30) Priority: 13.04.2011 FI 20115354
(43) Date of publication of application: 19.02.2014
(73) Proprietor: Wärtsilä Finland Oy, 65380 Vaasa (FI)
(72) Inventor: EL-ASHMAWY, Ali, FI-65380 Vaasa (FI); AURA, Matias, FI-65480 Vikby (FI); COLLANDER, Oskar, FI-65230 Vaasa (FI); NURMI, Hannu, FI-65380 Vaasa (FI)
(74) Representative: Berggren Oy, Helsinki & Oulu
(86) International application number: PCT/FI2012/050040
(87) International publication number: WO 2012/140313

(56) References cited:
- WO-A1-2010/074651
- DE-A1- 10 302 191
- GB-A- 422 127
- US-A- 4 223 073
- US-A- 4 498 433

## Description

### Technical field of the invention

The present invention relates to a crankcase door for covering an opening in a wall of the crankcase of an internal combustion engine in accordance with the preamble of claim 1.

### Background of the invention

Crankcases of large internal combustion engines, such as engines that are used in ships or at power plants, are provided with openings that provide access to the crankshaft and other parts inside the crankcase. The openings allow mounting and dismounting of different parts inside the engine as well as different inspection and maintenance tasks. The openings are covered with removable crankcase doors that are typically made of an aluminum alloy by casting. It has been noticed that due to engine vibrations, conventional crankcase doors can be a significant source of noise.

GB422127A provides an example of a known crankcase door.

### Summary of the invention

The object of the present invention is to provide an improved crankcase door for covering an opening in a wall of the crankcase of an internal combustion engine. The characterizing features of the crankcase door according to the present invention are given in the characterizing part of claim 1.

According to the present invention, the crankcase door comprises a frame that is attachable to the crankcase and defines the outer periphery of the crankcase door, the frame forming at least one opening within the area defined by the frame. The crankcase door further comprises a plate that is made at least partly of a sheet material and attached to the frame for covering the opening. With a crankcase door according to the invention, the noise generated by vibrations of the crankcase door can be reduced.

According to the invention, the thickness of the plate is 1-4 mm.

According to another embodiment of the invention, the frame is made from a casting. A suitable material is for instance aluminum or an aluminum alloy.

According to the invention, the plate has a sandwich structure comprising at least two support layers and at least one dampening layer that is made of a dampening material and arranged between the support layers. The dampening layer can be made for instance of a polymer, such as epoxy or silicone. The support layers can be made for instance of a metal or a metal alloy, such as steel. The sandwich structure with the dampening layer between the support layers helps to further reduce the noise generated by the crankcase door.

According to another embodiment of the invention, the crankcase door comprises an explosion relief valve. According to an embodiment of the invention, the explosion relief valve comprises a valve seat, a closure plate co-operating with the valve seat, a flame arrester for preventing flames from escaping the crankcase, a cover plate for guiding explosion gases, and a closing spring for pressing the closure plate against the valve seat, the cover plate having a sandwich structure comprising at least two support layers and at least one dampening layer that is made of a dampening material and arranged between the support layers. Engines of certain dimensions need to be provided with explosion relief valves. When an explosion relief valve with a noise reducing cover plate is combined with a crankcase door in accordance with the present invention, engine noise can be further reduced.

### Brief description of the drawings

Fig. 1 shows a crankcase door according to an embodiment of the invention.
Fig. 2 shows a cross-sectional view of the crankcase door of Fig. 1 along line A-A.
Fig. 3 shows the structure of the crankcase door plate according to an embodiment of the invention.
Fig. 4 shows a crankcase door with a pressure relief valve.
Fig. 5 shows a cross-sectional view of the crankcase door of Fig. 4 along line C-C.
Fig. 6 shows a cross-sectional view of the crankcase door of Fig. 4 along line B-B.
Fig. 7 shows the crankcase door of Fig. 4 from another direction.
Fig. 8 shows the cover plate structure of the explosion relief valve according to an embodiment of the invention.

### Detailed description of the invention

Embodiments of the invention are now described in more detail with reference to the accompanying drawings.

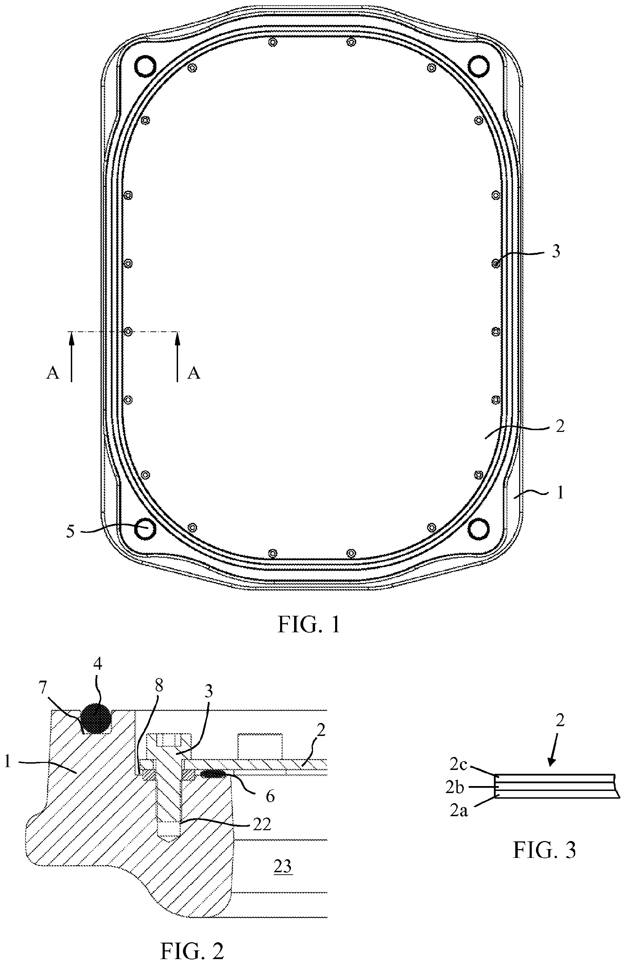

In figure 1 is shown a crankcase door according to an embodiment the invention. The crankcase door is intended for covering an opening in the crankcase of a large internal combustion engine, such as an engine that is used as a main or auxiliary engine of a ship or at a power plant for producing electricity. Figure 1 shows the crankcase side of the crankcase door. The crankcase door is removable for allowing access into the crankcase. Through the opening, the crankcase can be accessed for instance for mounting and dismounting parts inside the engine or for inspection and maintenance tasks. In the embodiment of the figures, the crankcase door is essentially rectangular, but it could also have some other form, such as circular.

The crankcase door comprises a frame 1 defining the outer periphery of the crankcase door. The frame 1 is suitably made from a casting. Suitable materials for the frame 1 are for instance aluminum alloys, such as silumin. The advantage of aluminum alloys is their lightness, but it is also possible to make the frame 1 of some other material. Also other materials and manufacturing methods can be used. For instance, the frame 1 could be made from a thick steel plate by flame-cutting. The crankcase side of the frame 1 is provided with a groove 7 for accommodating a gasket 4 that seals the mating surface between the crankcase door and the crankcase. Each of the four corners of the frame 1 is provided with a fastening hole 5 for accommodating bolts that are used for fastening the crankcase door to the crankcase. The frame 1 comprises a shoulder 8 on the inner periphery of the frame 1, as shown in the enlarged cross-sectional view of figure 2. The shoulder 8 is on the crankcase side of the frame 1. A plate 2 that is made of a sheet material lies on the shoulder 8 and covers thus the opening 23 that is defined by the frame 1. To reduce the noise generated in the crankcase door by the engine vibrations, the plate 2 must be thin enough in comparison to the dimensions of the crankcase door. The stiffness of the plate 2 should be substantially lower than the stiffness of the frame 1. The thickness of the plate 2 is suitably in the range between 1 and 4 mm. The material of the plate 2 can be for instance steel. A sealing 6 is arranged between the frame 1 and the plate 2. In the embodiment of figure 2, the sealing 6 is an extruded silicone sealing. The plate 2 is attached to the frame 1 by bolts 3. The shoulder 8 of the frame 1 is provided with holes 22 for accommodating the bolts 3. Since the plate 2 is on the crankcase side of the frame 1, overpressure inside the crankcase in case of a crankcase explosion pushes the plate 2 against the shoulder 8 and the sealing 6. The construction thus improves the strength and gas impermeability of the crankcase door.

A crankcase door according to the invention creates less noise than a conventional casted crankcase door. In order to reduce the noise created by the crankcase door, the plate 2 has a sandwich structure. According to the invention, as shown in the embodiment of figure 3, the plate 2 comprises a dampening layer 2b that is arranged between a pair of support layers 2a, 2c. The support layers 2a, 2c can be made of a metal or a metal alloy, such as steel. The support layers 2a, 2c do not necessarily need to be made of the same material. The dampening layer 2b is made of a material that dampens vibrations. Suitable materials for the dampening layer 2b are many polymers, such as epoxy or silicone. The plate 2 can comprise more than two support layers 2a, 2c and more than one dampening layer 2b. For instance, the plate 2 could comprise five or more layers so that the support layers and dampening layers are arranged alternately in the construction. It is also possible that more than one dampening layers are arranged between a pair of support layers. If the plate 2 comprises more than three layers, the outermost layers do not necessarily need to be support layers, but at least one of the outer layers can also be made of a dampening material. If the plate 2 comprises several dampening layers, the layers can be made of different materials.

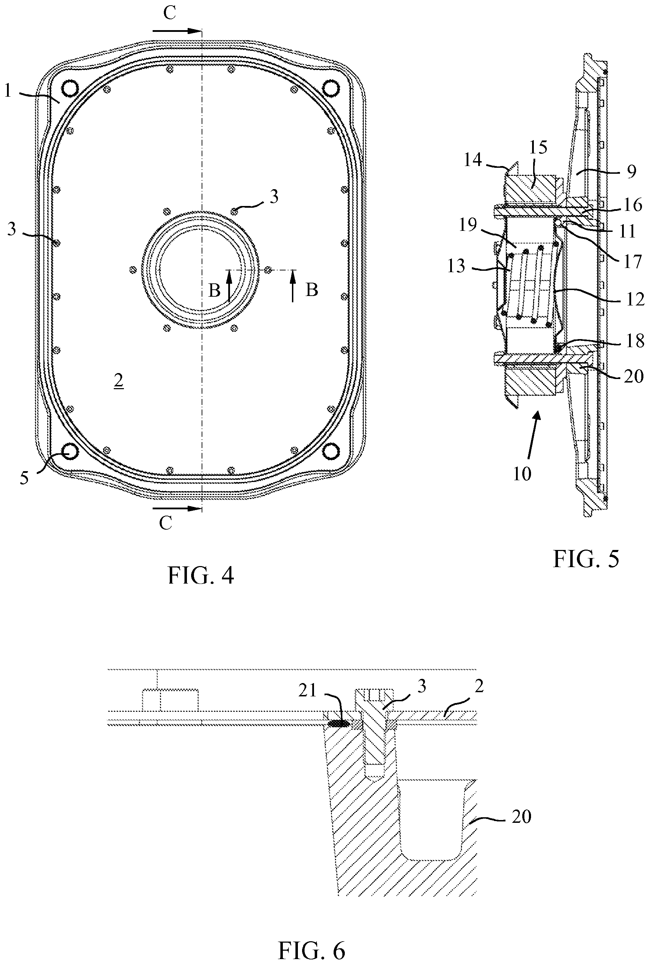

Figures 4-6 show a crankcase door according to another embodiment of the invention. In this embodiment, the crankcase door is provided with a pressure relief valve 10. According to the requirements of the International Association of Classification Societies (IACS) concerning machinery installations, internal combustion engines having a cylinder bore of 200 mm and above or a crankcase volume of 0.6 m³ and above have to be provided with crankcase explosion relief valves. The required number of the explosion relief valves depends on the cylinder bore, crankcase volume, free area of the relief valves and the number of crank throws. The valve relieves overpressure from the crankcase in case of an explosion and prevents air flow into the crankcase after the explosion.

The explosion relief valve 10 comprises a circular valve seat 11. The valve seat 11 comprises a groove 17 for accommodating a sealing. An O-ring seal 18 is arranged in the groove 17. A flame arrester 15 is arranged around the valve seat 11 protruding outwards from the plane of the valve seat 11. The flame arrester 15 is made of thin lamellas. The lamellas allow gas flow through the flame arrester 15 but prevent flames from escaping from the space that is protected by the explosion relief valve. A plurality of bolts 19 is arranged around the valve seat 11. The bolts 19 extend outwards from the plane of the valve seat 11 and support a cover plate 14 that is arranged on top of the flame arrester 15. The edge of the cover plate 14 is bent approximately 45 degrees towards the valve seat 11 for guiding possible explosion gas flow.

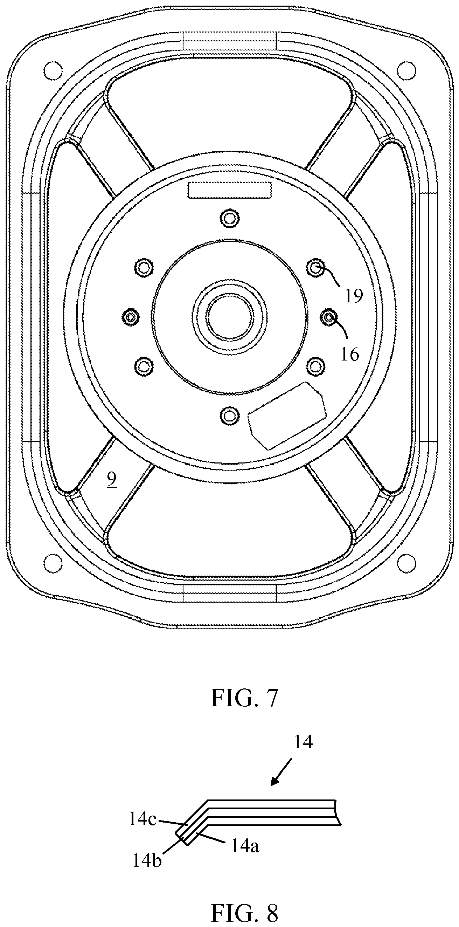

The valve 10 comprises a closure plate 12 that co-operates with the valve seat 11 and prevents fluid flow into the crankcase of the engine. The valve 10 is kept closed by a helical closing spring 13 that is arranged between the cover plate 14 and the closure plate 12 and presses the closure plate 12 against the valve seat 11. The closure plate 12 is guided by the bolts 19 supporting the cover plate 14. If the pressure in the crankcase increases, the closing spring 13 allows opening of the explosion relief valve 10 and gas flow out of the crankcase. To reduce noise that is caused by the cover plate 14 due to engine vibrations, the cover plate 14 can have a sandwich structure. According to an embodiment shown in figure 8, the cover plate 14 comprises a dampening layer 14b that is arranged between a pair of support layers 14a, 14c. The support layers 14a, 14c are made of a metal or a metal alloy, such as steel. The dampening layer 14b is made of a material that dampens vibrations. Suitable materials for the dampening layer 14b are many polymers, such as epoxy or silicone. The cover plate 14 can also comprise more than three layers, like the plate 2 of the crankcase door.

To support the explosion relief valve 10, the frame 1 of the crankcase door is provided with beams 9 that protrude inwards from the inner periphery of the frame 1. In the embodiment of the figures, the crankcase door is provided with four beams 9 that extend towards the center of the crankcase door, but also different constructions would be possible. A circular valve support 20 is arranged at the ends of the beams 9. In the embodiment of the figures, the beams 9 and the valve support 20 are part of the same casting as the frame 1. The explosion relief valve 10 is fastened to the valve support 20 with bolts 16. Also the plate 2 of the crankcase door is supported against the valve support 20. The plate 2 is provided with a hole that is aligned with the opening in the pressure relief valve 10 for allowing explosion gases to flow from the crankcase to the other side of the crankcase door. A second sealing 21 is arranged between the valve support 20 and the plate 2. The plate 2 is fastened also to the valve support 20 with bolts 3. Also in this embodiment, the plate 2 has the sandwich structure of figure 3.

The crankcase of the engine can comprise crankcase doors both with and without explosion relief valves 10. Especially when all the crankcase doors of the engine are provided with plates 1 having a sandwich structure and all the explosion relief valves 10 are provided with cover plates 14 having a similar construction, engine noise can be significantly reduced.

It will be appreciated by a person skilled in the art that the invention is not limited to the embodiments described above, but may vary within the scope of the appended claims.

## Claims

1. A crankcase door for covering an opening in a wall of the crankcase of an internal combustion engine, the crankcase door comprising a frame (1), which is made of aluminum, aluminum alloy or steel, the frame (1) being attachable to the crankcase and defining the outer periphery of the crankcase door, the frame (1) forming at least one opening (23) within the area defined by the frame (1), **characterized in that** the frame (1) comprises a shoulder (8) on the inner periphery of the frame (1) and the crankcase door comprises a plate (2) that is made at least partly of a sheet material, has a thickness of 1-4 mm and lies on the shoulder (8) of the frame (1) and is attached to the frame (1) for covering the opening (23), wherein the plate (2) has a sandwich structure comprising at least two support layers (2a, 2c) and at least one dampening layer (2b) that is made of a dampening material and arranged between the support layers (2a, 2c).

2. A crankcase door according to claim 1, **characterized in that** the frame (1) is made from a casting.

3. A crankcase door according to claim 1 or 2, **characterized in that** the support layers (2a, 2c) are made of a metal or a metal alloy.

4. A crankcase door according to claim 3, **characterized in that** the support layers (2a, 2c) are made of steel.

5. A crankcase door according to any of claims 1-4, **characterized in that** the dampening layer (2b) is made of a polymer.

6. A crankcase door according to claim 5, **characterized in that** the dampening layer (2b) is made of epoxy.

7. A crankcase door according to claim 5, **characterized in that** the dampening layer (2b) is made of silicone.

8. A crankcase door according to any of the preceding claims, **characterized in that** the frame (1) is made of aluminum or an aluminum alloy.

9. A crankcase door according to any of the preceding claims, **characterized in that** the crankcase door comprises an explosion relief valve (10).

10. A crankcase door according to claim 9, **characterized in that** the explosion relief valve (10) comprises a valve seat (11), a closure plate (12) co-operating with the valve seat (11), a flame arrester (15) for preventing flames from escaping the crankcase, a cover plate (14) for guiding explosion gases, and a closing spring (13) for pressing the closure plate (12) against the valve seat (11), the cover plate (14) having a sandwich structure comprising at least two support layers (14a, 14c) and at least one dampening layer (14b) that is made of a dampening material and arranged between the support layers (14a, 14c).

## Patentansprüche

1. Tür für ein Kurbelgehäuse zum Abdecken einer Öffnung in einer Wand des Kurbelgehäuses eines Verbrennungsmotors, wobei die Tür für das Kurbelgehäuse einen Rahmen (1) umfasst, welcher aus Aluminium, Aluminiumlegierung oder Stahl hergestellt ist, wobei der Rahmen (1) an dem Kurbelgehäuse zu befestigen ist und den Außenrand der Tür für das Kurbelgehäuse definiert, wobei der Rahmen (1) mindestens eine Öffnung (23) in dem Bereich bildet, der durch den Rahmen (1) definiert ist, **dadurch gekennzeichnet, dass** der Rahmen (1) eine Schulter (8) an dem Innenrand des Rahmens (1) umfasst und die Tür für das Kurbelgehäuse eine Platte (2) umfasst, welche zumindest teilweise aus einem Blechmaterial hergestellt ist, eine Dicke von 1 mm bis 4 mm aufweist und auf der Schulter (8) des Rahmens (1) liegt und zum Abdecken der Öffnung (23) an dem Rahmen (1) befestigt ist, wobei die Platte (2) eine Sandwichstruktur aufweist, welche mindestens zwei Stützschichten (2a, 2c) und mindestens eine Dämpfungsschicht (2b) umfasst, die aus einem Dämpfungsmaterial hergestellt ist und zwischen den Stützschichten (2a, 2c) angeordnet ist.

2. Tür für ein Kurbelgehäuse nach Anspruch 1, **dadurch gekennzeichnet, dass** der Rahmen (1) aus einem Gussstück hergestellt ist.

3. Tür für ein Kurbelgehäuse nach Anspruch 1 oder 2, **dadurch gekennzeichnet, dass** die Stützschichten (2a, 2c) aus einem Metall oder einer Metalllegierung hergestellt sind.

4. Tür für ein Kurbelgehäuse nach Anspruch 3, **dadurch gekennzeichnet, dass** die Stützschichten (2a, 2c) aus Stahl hergestellt sind.

5. Tür für ein Kurbelgehäuse nach einem der Ansprüche 1 bis 4, **dadurch gekennzeichnet, dass** die Dämpfungsschicht (2b) aus einem Polymer hergestellt ist.

6. Tür für ein Kurbelgehäuse nach Anspruch 5, **dadurch gekennzeichnet, dass** die Dämpfungsschicht (2b) aus Epoxidharz hergestellt ist.

7. Tür für ein Kurbelgehäuse nach Anspruch 5, **dadurch gekennzeichnet, dass** die Dämpfungsschicht (2b) aus Silikon hergestellt ist.

8. Tür für ein Kurbelgehäuse nach einem der vorhergehenden Ansprüche, **dadurch gekennzeichnet, dass** der Rahmen (1) aus Aluminium oder einer Aluminiumlegierung hergestellt ist.

9. Tür für ein Kurbelgehäuse nach einem der vorhergehenden Ansprüche, **dadurch gekennzeichnet, dass** die Tür für das Kurbelgehäuse ein Explosionsentlastungsventil (10) umfasst.

10. Tür für ein Kurbelgehäuse nach Anspruch 9, einem der vorhergehenden Ansprüche, **dadurch gekennzeichnet, dass** das Explosionsentlastungsventil (10) einen Ventilsitz (11), eine mit dem Ventilsitz (11) zusammenwirkende Verschlussplatte (12), eine Flammenrückschlagsicherung (15) zum Verhindern, dass Flammen aus dem Kurbelgehäuse austreten, eine Abdeckplatte (14) zum Führen von Explosionsgasen und eine Verschlussfeder (13) zum Drücken der Verschlussplatte (12) gegen den Ventilsitz (11) umfasst, wobei die Abdeckplatte (14) eine Sandwichstruktur aufweist, welche mindestens zwei Stützschichten (14a, 14c) und mindestens eine Dämpfungsschicht (14b) umfasst, die aus einem Dämpfungsmaterial hergestellt ist und zwischen den Stützschichten (14a, 14c) angeordnet ist.

## Revendications

1. Porte de carter destinée à couvrir une ouverture dans une paroi du carter d'un moteur à combustion interne, la porte de carter comprenant un cadre (1) constitué d'aluminium, d'un alliage d'aluminium ou d'acier, le cadre (1) pouvant être fixé au carter et définissant la périphérie extérieure de la porte de carter, le cadre (1) formant au moins une ouverture (23) dans la zone définie par le cadre (1), **caractérisée en ce que** le cadre (1) comprend un épaulement (8) sur la périphérie intérieure du cadre (1) et la porte de carter comprend une plaque (2) constituée au moins partiellement d'un matériau en feuille, présentant une épaisseur de 1 à 4 mm et reposant sur l'épaulement (8) du cadre (1), tout en étant fixée au cadre (1) pour recouvrir l'ouverture (23), la plaque (2) présentant une structure en sandwich comprenant au moins deux couches de support (2a, 2c) et au moins une couche d'amortissement (2b) constituée d'un matériau d'amortissement et disposée entre les couches de support (2a, 2c).

2. Porte de carter selon la revendication 1, **caractérisée en ce que** le cadre (1) est constitué d'un moulage.

3. Porte de carter selon la revendication 1 ou 2, **caractérisée en ce que** les couches de support (2a, 2c) sont constituées d'un métal ou d'un alliage de métaux.

4. Porte de carter selon la revendication 3, **caractérisée en ce que** les couches de support (2a, 2c) sont constituées d'acier.

5. Porte de carter selon l'une quelconque des revendications 1 à 4, **caractérisée en ce que** la couche d'amortissement (2b) est constituée d'un polymère.

6. Porte de carter selon la revendication 5, **caractérisée en ce que** la couche d'amortissement (2b) est constituée d'une résine époxy.

7. Porte de carter selon la revendication 5, **caractérisée en ce que** la couche d'amortissement (2b) est constituée de silicone.

8. Porte de carter selon l'une quelconque des revendications précédentes, **caractérisée en ce que** le cadre (1) est constitué d'aluminium ou d'un alliage d'aluminium.

9. Porte de carter selon l'une quelconque des revendications précédentes, **caractérisée en ce que** la porte de carter comprend un clapet anti-explosion (10) .

10. Porte de carter selon la revendication 9, **caractérisée en ce que** le clapet anti-explosion comprend un siège de clapet (11), une plaque de fermeture (12) coopérant avec le siège de clapet (11), un arrête-flammes (15) destiné à empêcher des flammes de s'échapper du carter, une plaque de couverture (14) destinée à guider des gaz d'explosion, et un ressort de fermeture (13) destiné à presser la plaque de fermeture (12) contre le siège de clapet (11), la plaque de couverture (14) présentant une structure en sandwich comprenant au moins deux couches de support (14a, 14c) et au moins une couche d'amortissement (14b) constituée d'un matériau d'amortissement et disposée entre les couches de support (14a, 14c).
